(19) Europäisches Patentamt / European Patent Office / Office européen des brevets

(11) **EP 4 253 482 A1**

(12) **EUROPEAN PATENT APPLICATION**
published in accordance with Art. 153(4) EPC

(43) Date of publication:
04.10.2023 Bulletin 2023/40

(21) Application number: 21897914.4

(22) Date of filing: 22.11.2021

(51) International Patent Classification (IPC):
C08L 101/00 (2006.01)      C08K 3/013 (2018.01)
C08K 3/22 (2006.01)      C08K 3/28 (2006.01)
C08K 7/18 (2006.01)

(52) Cooperative Patent Classification (CPC):
C08K 3/22; C08K 3/013; C08K 3/28; C08K 3/38;
C08K 7/18; C08L 101/00; C08K 2003/2227;
C08K 2003/282; C08K 2003/385; C08K 2201/005

(86) International application number:
PCT/JP2021/042825

(87) International publication number:
WO 2022/113941 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.11.2020  JP 2020197869
02.06.2021  JP 2021093062

(71) Applicant: Tokuyama Corporation
Shunan-shi, Yamaguchi 745-8648 (JP)

(72) Inventors:
• FUJII Saiko
Shunan-shi, Yamaguchi 745-8648 (JP)
• INAKI Yoshitaka
Shunan-shi, Yamaguchi 745-8648 (JP)

(74) Representative: Dehns
St. Bride's House
10 Salisbury Square
London EC4Y 8JD (GB)

(54) **RESIN COMPOSITION**

(57)  One embodiment of the present invention relates to a resin composition or a method of producing a resin composition, and the resin composition includes 100 parts by volume of a resin (A); and 230 to 640 parts by volume of a filler (B) having an average particle diameter of 5 um to 60 um, wherein the filler (B) contains a filler (B-1) having a spherical shape with an average particle diameter of 0.1 um or more and 0.7 um or less and a filler (B-2) having a peak at least in a range of 0.9 um to 3.0 $\mu$m in a particle size distribution measured by a laser diffraction method, and the proportion of the filler (B-1) is from 0.2 vol% to 5.0 vol% with respect to 100 vol% of the filler (B).

EP 4 253 482 A1

**Description**

Technical Field

One embodiment of the present invention relates to a novel resin composition or a method of producing a resin composition.

Background Art

In recent years, with an increase in power density of a semiconductor device, a material used for the device is required to have higher heat dissipation characteristics. As such a material, there is a series of materials called thermal interface materials, and the usage thereof is rapidly expanding. The thermal interface material is a material for alleviating thermal resistance of a path for releasing heat generated from a heat-generating part such as a semiconductor element to, for example, a heat sink or a housing, and various forms such as sheets, gels, and greases are used. In general, the thermal interface material is a resin composition in which a thermally conductive filler is dispersed in a resin such as epoxy or silicone, and as the thermally conductive filler, for example, silica, alumina, or aluminum nitride is used.

In such a resin composition, it is desired to improve filling properties of the filler. By improving the filling properties of the filler, the viscosity of the resin composition can be reduced. As a result, the flexibility of the resin composition is improved, and the resin composition is easily molded into a desired shape.

As a means for improving the filling properties of the filler, combinations of fillers having various particle diameters are widely used. As a result, particles having a small particle diameter enter gaps between particles having a large particle diameter, and a structure close to a close-packed structure is obtained, so that high filling properties can be obtained. For example, known examples are combinations a filler having a particle diameter of several tens um, a filler having a particle diameter of several um, and a filler having a particle diameter of several hundred nm as in Patent Literatures 1 and 2.

Patent Literature 1 describes that in a resin composition containing a diepoxy compound, a curing agent, and alumina, the alumina is preferably a mixture of alumina particles A having a D50 of 2 $\mu$m or more and 100 $\mu$m or less, alumina particles B having a D50 of 1 $\mu$m or more and 10 um or less, and alumina particles C having a D50 of 0.01 um or more and 5 um or less. The examples disclose a resin composition containing alumina particles A1 having a D50 of 18 um, alumina particles B1 having a D50 of 3 um, and alumina particles C1 having a D50 of 0.4 um in a volume ratio of 74/14/12.

In addition, Patent Literature 2 describes that in a composition for a thermally conductive grease containing silicone and a thermally conductive filler (resin composition), three kinds of thermally conductive fillers having different average particle diameters, which are composed of a coarse powder having an average particle diameter of 15 to 100 um, a medium-particle powder having an average particle diameter of 2 to 11 um, and a fine powder having an average particle diameter of 0.5 to 1 um, are used in order to achieve all of filling properties, insulating properties, crack resistance, thermal conductivity, and pumpout resistance. The examples disclose a resin composition in which the weight ratio of the coarse powder, the medium-particle powder, and the fine powder is about 52/30/18.

Citation List

Patent Literature

    Patent Literature 1: JP 2012-111927 A
    Patent Literature 2: JP 2016-216523 A

Summary of Invention

Technical Problem

As described above, in the resin composition, a method for improving the filling properties of the filler has been desired. Therefore, one embodiment of the present invention provides a resin composition having high filler filling properties.

Solution to Problem

As a result of intensive studies, the present inventors have found that when in a filler having a specific particle size distribution, a spherical filler having a specific microparticle diameter is present in a very small amount that has not been conventionally used, the fillers are significantly improved in filling properties into a resin. As a result of further studies, it has been found that the filling properties are remarkably improved when the average particle diameter of the spherical filler having a fine particle diameter is 0.1 to 0.7 um, and the finding has led to completion of the present invention.

A configuration example of the present invention is as follows.

One embodiment of the present invention is a resin composition including 100 parts by volume of a resin (A); and 230 to 640 parts by volume of a filler (B) having an average particle diameter of 5 um to 60 um, wherein the filler (B) contains a filler (B-1) having a spherical shape with an average particle diameter of 0.1 um or more and 0.7 um or less and a filler (B-2) having a peak at least in a range of 0.9 um to 3.0 um in a particle size distribution measured by a laser diffraction method, and the proportion of the filler (B-1) is from 0.2 vol% to 5.0 vol% with respect to 100 vol% of the filler (B).

In one preferred embodiment, the filler (B-2) further has a peak within a range of preferably 5 um or more, more preferably 10 um or more, and preferably 150 um or less, more preferably 120 um or less in particle size distribution measured by a laser diffraction method. The D10 of the filler (B-2) is preferably larger than the D90 of the filler (B-1). Preferably, the filler (B-1) contains alumina, and the filler (B-2) contains aluminum nitride.

Further, one embodiment of the present invention is a method of producing a resin composition, including:

a step of mixing a resin (A), a filler (B-1) having a spherical shape with an average particle diameter of 0.1 um or more and 0.7 um or less, and a filler (B-2) containing a filler (b2-1) with an average particle diameter of 0.9 um to 3.0 $\mu$m, wherein the total blending amount of the filler (B-1) and the filler (B-2) is 230 to 640 parts by volume with respect to 100 parts by volume of the resin (A),

the filler (B-1) and the filler (B-2) as a whole have an average particle diameter of 5 um to 60 um, and

the blending amount of the filler (B-1) is from 0.2 vol% to 5.0 vol% with respect to 100 vol% of the total of the filler (B-1) and the filler (B-2).

Advantageous Effects of Invention

According to one embodiment of the present invention, it is possible to obtain a resin composition having high filler filling properties. As a result, it is possible to obtain a resin composition having high flexibility, and the resin composition is easily molded into a desired shape. When a resin that becomes a rubbery cured product after curing is used as the resin (A), a resin composition cured product obtained by curing the resin composition also has high flexibility. When the resin composition cured product is used as, for example, a heat dissipation sheet provided between a heat-generating part and a heat dissipation member such as a heat dissipation fin or a heat sink, it becomes easy to improve adhesion with, for example, the heat-generating part or the heat dissipation member.

Description of Embodiments

(Resin composition)

The resin composition according to one embodiment of the present invention is a resin composition including 100 parts by volume of a resin (A); and 230 to 640 parts by volume of a filler (B) having an average particle diameter of 5 um to 60 um, wherein the filler (B) contains a filler (B-1) having a spherical shape with an average particle diameter of 0.1 um or more and 0.7 um or less and a filler (B-2) having a peak at least in a range of 0.9 um to 3.0 $\mu$m in a particle size distribution measured by a laser diffraction method, and the proportion of the filler (B-1) is from 0.2 vol% to 5.0 vol% with respect to 100 vol% of the filler (B).

(Resin (A))

The resin (A) is not particularly limited, and examples thereof include curable resins such as epoxy resins, curable acrylic resins, curable urethane resins, curable silicone resins, phenol resins, curable polyimide resins, curable modified PPEs, and curable PPEs. Among these resins, curable silicone resins or epoxy resins are particularly preferable in preparing a molded body such as a plate shaped molded body or a thin-film molded body.

Examples of the resin that becomes rubbery after curing include curable urethane resins and curable silicone resins, and among these, curable silicone resins are particularly preferable.

Examples of the epoxy resin include bisphenol A type epoxy resins, bisphenol S type epoxy resins, bisphenol F type epoxy resins, bisphenol A type hydrogenated epoxy resins, polypropylene glycol type epoxy resins, polytetramethylene glycol type epoxy resins, naphthalene type epoxy resins, phenylmethane type epoxy resins, tetrakisphenol methane type epoxy resins, biphenyl type epoxy resins, epoxy resins having a triazine core in the skeleton, and bisphenol A alkylene oxide adduct type epoxy resins. These epoxy resins may be used singly, or two or more kinds thereof may be used.

When an epoxy resin is used, for example, an amine curing agent, an acid anhydride curing agent, a phenol curing agent, or an imidazole curing agent may be used as the curing agent. These curing agents may be used singly, or two or more kinds thereof may be used. The blending amount of the curing agent with respect to the epoxy resin is preferably 0.5 or more in an equivalent ratio, more preferably 0.7 or more in an equivalent ratio, and preferably 1.5 or less in an equivalent ratio, more preferably 1.3 or less in an equivalent ratio in an equivalent ratio with respect to the epoxy resin.

In the present specification, these curing agents are also included in the resin.

Examples of the curable silicone resin include addition reaction type silicone resins and condensation reaction type silicone resins. When a hydrolyzable filler such as aluminum nitride is used as the filler, it is desirable to use an addition reaction type silicone resin. Examples of the addition reaction type silicone resin include resins in which a polyorganosiloxane having a vinyl group and a polyorganosiloxane having a hydrosilyl group form a crosslinked structure by hydrosilylation reaction with the aid of a catalyst, and the addition reaction type silicone resin can be used without particular limitation.

When a curable silicone resin is used, a catalyst may be used, and as the catalyst, for example, a known platinum catalyst used for curing the silicone resin can be used without limitation. Examples thereof include fine particulate platinum, fine particulate platinum supported on carbon powder, chloroplatinic acid, alcohol-modified chloroplatinic acid, olefin complexes of chloroplatinic acid, palladium, and rhodium catalysts.

In the present specification, these catalysts are also included in the resin.

(Filler (B))

The resin composition according to one embodiment of the present invention contains a filler (B) having an average particle diameter of 5 um to 60 um. The filler (B) having an average particle diameter of 5 um to 60 um has appropriate handleability.

The filler (B) contains a filler (B-1) having a spherical shape with an average particle diameter of 0.1 $\mu$m or more and 0.7 um or less and a filler (B-2) having a peak at least in a range of 0.9 um to 3.0 um in a particle size distribution measured by a laser diffraction method, is preferably composed only of the fillers (B-1) and (B-2), and is a filler in which the proportion of the filler (B-1) is from 0.2 vol% to 5.0 vol% with respect to 100 vol% of the filler (B).

It is presumed that by using such a specific filler formulation, movement of the filler when an external force is applied to the resin composition becomes smooth, and a resin composition having high filler filling properties can be easily obtained.

Specifically, the filler (B-1) having an average particle diameter of 0.1 um or more and 0.7 um or less, which is smaller than the peak observed in the particle size distribution of the filler (B-2), and a spherical shape is blended in an extremely small amount of from 0.2 vol% to 5.0 vol% with respect to 100 vol% of the filler (B). In the resin composition according to one embodiment of the present invention containing the specific filler (B-2), it is presumed that since the specific filler (B-1) is blended in a specific amount, the filler (B-1) is interposed in gaps in the filler (B-2), particularly between particles having a particle diameter of 0.9 $\mu$m to 3.0 $\mu$m in the filler (B-2), and when an external force is applied to the resin composition, movement of the filler (B-2), particularly the particles having a particle diameter of 0.9 $\mu$m to 3.0 $\mu$m in the filler (B-2) can be smoothed, so that an increase in viscosity of the resin composition can be suppressed. When the amount of the filler (B-1) is less than 0.2 vol% with respect to 100 vol% of the filler (B), the effect of smoothing the movement of the filler when an external force is applied to the resin composition cannot be sufficiently obtained. When the amount of the filler (B-1) is more than 5.0 vol% with respect to 100 vol% of the filler (B), gaps in the filler (B-2), particularly gaps formed by particles having a particle diameter of 0.9 $\mu$m to 3.0 $\mu$m in the filler (B-2) are filled, movement of the filler when an external force is applied to the resin composition is restricted, and it becomes difficult to obtain the effect of smoothing the movement of the filler.

The "average particle diameter" in the present invention is a particle diameter D50 at a cumulative 50% value on a volume basis in a particle size distribution measured by a laser diffraction method.

The average particle diameter of the filler (B) is D50 in the particle size distribution which is obtained from addition of the particle size distributions obtained from multiplication of the particle size distribution of each filler constituting the filler (B) by the volume ratio of the blending amount of the filler. Specifically, when the filler (B) is composed of the fillers (B-1) and (B-2), the average particle diameter of the filler (B) is D50 in the particle size distribution of the entire filler (B) which is obtained from addition of a distribution obtained from multiplication of the particle size distribution of the filler (B-1) by the volume ratio of the blending amount of the filler (B-1) and a distribution obtained from multiplication of the particle size distribution of the filler (B-2) by the volume ratio of the blending amount of the filler (B-2).

Specifically, the particle size distribution of each filler can be measured by a laser diffraction method using, as a sample, one obtained by adding 5 ml of a 5% sodium pyrophosphate aqueous solution to 90 ml of water, adding a filler to the solution, and dispersing the filler with a homogenizer at an output of 200 mA for 3 minutes. The amount of the filler added in the homogenizer treatment is 0.05 g when D50 is less than 2 um, 0.1 g when D50 is 2 to 10 um, and 0.3 g when D50 exceeds 10 um.

(Filler (B-1))

The filler (B-1) has an average particle diameter of 0.1 um or more and 0.7 um or less, and is spherical. When a filler having an average particle diameter of less than 0.1 um is used instead of the filler (B-1), since the specific surface area of the filler is large, the viscosity of the resin composition tends to increase, and aggregation of the filler itself tends to occur. As a result, the effect of microparticles is not sufficiently obtained, and movement of the filler (B-2) is less likely to be smooth when an external force is applied to the resin composition. When a filler having an average particle diameter of more than 0.7 um is used instead of the filler (B-1), the filler is less likely to be interposed in gaps in the filler (B-2).

On the other hand, when the filler (B-1) is used, the movement of the filler (B-2) can be smoothed without increasing the viscosity of the resin composition.

The average particle diameter of the filler (B-1) is preferably 0.15 um or more, preferably 0.6 um or less, and more preferably 0.5 um or less.

It is also presumed that since the shape of the filler (B-1) is spherical, the filler (B-1) is interposed between the gaps in the filler (B-2), and the movement of the filler (B-2) can be smoothed when an external force is applied to the resin composition.

"Spherical" in the present invention means that the circularity is 0.80 or more. The circularity of the filler (B-1) is preferably 0.90 or more, and more preferably 0.94 or more. The circularity is calculated by circularity $= 4\pi S/L^2$ using the area S and the perimeter L of the filler measured by image analysis, and is 1 in the case of a perfect circle.

The circularity can be calculated, for example, by observing 20 fields of view at magnification of 50,000 with a field emission scanning electron microscope and analyzing fillers within the field-of-view area using an image analysis system.

The D10/D50 of the filler (B-1) is preferably 0.70 or more, more preferably 0.72 or more, and still more preferably 0.75 or more.

The fact that D10/D50 is in the above range means that the number of particles having a small particle diameter is small, and by using the filler (B-1) having D10/D50 in the above range, the viscosity of the resin composition is less likely to increase.

The D50/D90 of the filler (B-1) is preferably 0.60 or more, more preferably 0.61 or more, and still more preferably 0.65 or more.

The fact that D50/D90 is in the above range means that the number of particles having a large particle diameter is small, and by using the filler (B-1) having D50/D90 in the above range, the filler (B-1) is likely to be interposed in the gaps in the filler (B-2).

In addition, when cumulation from the small diameter side is performed in the volume-based particle size distribution measured by the laser diffraction method described above, the particle diameter at a cumulative 10% value on a volume basis is D10, and the particle diameter at a cumulative 90% value on a volume basis is D90.

The kind of the filler (B-1) is not particularly limited, and examples thereof include silica, alumina, zinc oxide, magnesium oxide, titanium oxide, silicon nitride, aluminum nitride, boron nitride, aluminum hydroxide, magnesium hydroxide, silicon carbide, calcium carbonate, barium sulfate, talc, and diamond. In addition, a plurality of kinds of fillers may be used as the filler (B-1).

When the resin composition is used as a heat dissipation material, the filler (B-1) is preferably silica, alumina, silicon nitride, aluminum nitride, boron nitride, or diamond having high thermal conductivity. In the case in which nitrides have small particle diameters and large specific surface areas, they severely deteriorate due to hydrolysis, and are not easy to handle. Thus, it is more preferably alumina having excellent stability and thermal conductivity.

The filler (B-1) may be a filler with a surface treatment using a surface treatment agent.

As the surface treatment agent, for example, a known surface treatment agent such as a silane coupling agent can be used without particular limitation, and representative examples thereof include alkoxysilanes (for example, methyltrimethoxysilane, dimethyldimethoxysilane, phenyltrimethoxysilane, methyltriethoxysilane, trifluoropropyltrimethoxysilane, phenyltriethoxysilane, hexyltrimethoxysilane, octyltriethoxysilane, and decyltrimethoxysilane), silazanes (for example, tetramethylsilazane and hexamethyldisilazane), and cyclic siloxanes (for example, tetramethylcyclotetrasiloxane, octamethylcyclotetrasiloxane, and hexamethylcyclotrisiloxane).

The amount of the surface treatment agent used is preferably suppressed to about 0.01 to 2 parts by mass with respect to 100 parts by mass of the filler (B-1). As the surface treatment method, a known method can be used without particular limitation, and the surface treatment may be performed in a wet or dry manner.

(Filler (B-2))

The filler (B-2) has a peak at least in a range of 0.9 um to 3.0 um, preferably in a range of 0.9 um to 2.0 um, and more preferably in a range of 1.0 um to 1.5 um in particle size distribution measured by a laser diffraction method. The filler (B-2) may have a plurality of peaks in this range.

As described above, it is presumed that particles of the filler (B-1) are interposed in gaps in the filler (B-2), particularly between particles having a particle diameter of 0.9 um to 3.0 um in the filler (B-2), and when an external force is applied to the resin composition, movement of the filler (B-2), particularly the particles having a particle diameter of 0.9 um to 3.0 um in the filler (B-2) becomes smooth, so that an increase in viscosity of the resin composition can be suppressed.

The peak is confirmed in a particle size distribution measured by a laser diffraction method, and the measurement of the particle size distribution by the laser diffraction method can be performed by the same method as the measurement of the average volume particle diameter.

The filler (B-2) may have other peaks besides those in the range of 0.9 um to 3.0 um in a particle size distribution obtained by a laser diffraction method as long as the effects of the present invention are not impaired.

Examples of the other peak include peaks in a range of preferably 5 um or more, more preferably 10 um or more, and preferably 150 um or less, more preferably 120 um or less, and the filler (B-2) preferably has a peak in this range. By using the filler (B-2) having such other peaks, a resin composition having higher filler filling properties can be easily obtained.

The ratio (H1/H2) of the peak height (H1) of the peak in the range of 0.9 um to 3.0 um to the peak height (H2) of the peak in the range of 5 um to 150 um is preferably 0.2 to 1.3, and more preferably 0.4 to 1.1. In the calculation of H1/H2, when there is a plurality of peaks in each range, H1/H2 is calculated using the highest peak in each range.

The D10 of the filler (B-2) is preferably larger than the D90 of the filler (B-1). The D10 of the filler (B-2) is preferably 0.8 um or more. When D10 of the filler (B-2) is larger than D90 of the filler (B-1), the filler (B-1) exists in the gaps in the filler (B-2), and the effect of smoothing the movement of the filler is more easily exhibited.

The shape of the particles constituting the filler (B-2) is not particularly limited, and examples thereof include spherical, rounded, crushed, plate shaped, fibrous, and aggregated particles, and particles having different shapes may be used.

The kind of particles constituting the filler (B-2) is also not particularly limited, and examples thereof include silica, alumina, zinc oxide, magnesium oxide, titanium oxide, silicon nitride, aluminum nitride, boron nitride, aluminum hydroxide, magnesium hydroxide, silicon carbide, calcium carbonate, barium sulfate, talc, and diamond. In addition, a plurality of kinds of fillers may be used as the filler (B-2) .

When the resin composition is used as a heat dissipation material, the filler (B-2) is preferably silica, alumina, silicon nitride, aluminum nitride, or boron nitride having high thermal conductivity, and more preferably contains aluminum nitride.

The filler (B-2) may be a filler with a surface treatment using a surface treatment agent.

As the surface treatment agent, for example, a known surface treatment agent such as a silane coupling agent can be used without particular limitation, and representative examples thereof include alkoxysilanes (for example, methyltrimethoxysilane, dimethyldimethoxysilane, phenyltrimethoxysilane, methyltriethoxysilane, trifluoropropyltrimethoxysilane, phenyltriethoxysilane, hexyltrimethoxysilane, octyltriethoxysilane, and decyltrimethoxysilane), silazanes (for example, tetramethylsilazane and hexamethyldisilazane), and cyclic siloxanes (for example, tetramethylcyclotetrasiloxane, octamethylcyclotetrasiloxane, and hexamethylcyclotrisiloxane).

The amount of the surface treatment agent used is preferably suppressed to about 0.01 to 2 parts by mass with respect to 100 parts by mass of the filler (B-2). As the surface treatment method, a known method can be used without particular limitation, and the surface treatment may be performed in a wet or dry manner.

The filler (B-2) is not particularly limited as long as it has a peak at least in the range of 0.9 um to 3.0 um in particle size distribution measured by a laser diffraction method, but specifically, one or more kinds of fillers having an average particle diameter of 0.9 $\mu$m to 3.0 $\mu$m (hereinafter, also referred to as "filler (b2-1)") only may be used, or one or more kinds of fillers (b2-1) and one or more kinds of fillers not having an average particle diameter in the range of 0.9 um to 3.0 $\mu$m (hereinafter, also referred to as "filler (b2-2)") may be used. From the viewpoint that, for example, the effect of the present invention is more exhibited, one or more kinds of fillers (b2-1) and one or more kinds of fillers (b2-2) are preferably used.

When the resin composition is used as a heat dissipation material, at least one of the filler (b2-1) and the filler (b2-2) is preferably silica, alumina, silicon nitride, aluminum nitride, or boron nitride having high thermal conductivity, and more preferably aluminum nitride. The kinds of the filler (b2-1) and the filler (b2-2) may be the same or different from each other.

At least one of the filler (b2-1) and the filler (b2-2) may be treated with the surface treatment agent.

The filler (b2-2) is not particularly limited as long as it is a filler other than the filler (B-1) and the filler (b2-1), but examples thereof include a filler having an average particle diameter of preferably 5 um or more, more preferably 10 um or more, and preferably 150 um or less, more preferably 120 um or less.

(Other component (C))

In the resin composition according to one embodiment of the present invention, other components besides the resin (A) and the filler (B) may be blended as long as the effect of the present invention is not impaired. Examples of the other components include curing accelerators, affinity agents, discoloration inhibitors, surfactants, dispersants, coupling agents, colorants, plasticizers, viscosity modifiers, antibacterial agents, and reaction retarders.

These other components may be used singly, or two or more kinds thereof may be used.

(Method of producing resin composition)

The resin composition according to one embodiment of the present invention can be produced by mixing the resin (A), the filler (B), and if necessary, the other component (C). The mixing method is not limited at all, and may be performed using a general mixer. Examples of such a mixer include kneaders such as planetary mixers, roll kneaders such as triple rolls, grinders, and planetary centrifugal mixers. Mixing may be performed in, for example, a mortar.

The order of adding the raw materials at the time of mixing is also not particularly limited. The filler (B) obtained by mixing the filler (B-1) and the filler (B-2) in advance may be added to the resin (A), or one of the filler (B-1) and the filler (B-2) may be added to the resin (A) and mixed, and then the other may be added and further mixed.

When a resin obtained by mixing two or more components (for example, the main agent component and a curing agent component) to, for example, cure, such as an addition reaction type curable silicone resin, is used as the resin (A), the two or more components may be mixed in advance, and then the filler (B) may be blended, or after the filler (B) is blended to at least one of the two or more components as a raw material of the resin, the two or more components may be mixed. Specifically, when the resin (A) is an addition reaction type curable silicone resin, the filler (B) may be blended after mixing the polyorganosiloxane having a vinyl group and the polyorganosiloxane having a hydrosilyl group, or the filler (B) may be blended into one or both, preferably both, of the polyorganosiloxane having a vinyl group and the polyorganosiloxane having a hydrosilyl group, and then these may be mixed. When the filler (B) is blended after mixing the polyorganosiloxane having a vinyl group and the polyorganosiloxane having a hydrosilyl group, it is preferable to add a platinum catalyst after blending the filler (B) in order to prevent viscosity change during kneading of the filler (B). When the filler (B) is blended after mixing the polyorganosiloxane having a vinyl group and the polyorganosiloxane having a hydrosilyl group using the silicone resin already containing a platinum catalyst, it is preferable to add a reaction retarder such as acetylene alcohol.

The resin composition according to one embodiment of the present invention may also include a composition in which the filler (B) is blended in two or more components to be raw materials of the resin.

The filler (B-2) may be produced by mixing a plurality of fillers (for example, the filler (b2-1) and the filler (b2-2)), or a plurality of fillers may be sequentially added to the resin (A) such that the filler (B-2) is contained in the resin composition. When a plurality of fillers is sequentially added to the resin such that the filler (B-2) is contained in the resin composition, the particle size distribution of the filler (B-2) may be calculated from the result of the particle size distribution of each filler that has been measured in advance.

The blending amount of the filler at the time of mixing may be such that the filler (B) is 230 to 640 parts by volume with respect to 100 parts by volume of the resin (A). Further, the filler (B-1) may be blended so as to be from 0.2 vol% to 5.0 vol% with respect to 100 vol% of the filler (B).

The blending amount of the filler (B) with respect to 100 parts by volume of the resin (A) is 230 parts by volume or more, preferably 260 parts by volume or more, more preferably 300 parts by volume or more, still more preferably 500 parts by volume or more, and 640 parts by volume or less, preferably 620 parts by volume or less, more preferably 600 parts by volume or less, still more preferably 550 parts by volume or less.

When the blending amount of the filler (B) is within the above range, a resin composition having high filler filling properties can be easily obtained.

The blending amount of the filler (B-1) with respect to 100 volume% of the filler (B) is 0.2 volume% or more, preferably 0.4 volume% or more, more preferably 0.5 volume% or more, still more preferably 1.0 volume% or more, and 5.0 volume% or less, preferably 4.7 volume% or less, more preferably 4.0 volume% or less, still more preferably 3.0 volume% or less.

When the blending amount of the filler (B-1) is within the above range, an increase in viscosity of the resin composition can be suppressed.

As an example of the method of producing a resin composition, there is a method of producing a resin composition (hereinafter, also referred to as "production method I") including:

a step of mixing a resin (A), a filler (B-1) having a spherical shape with an average particle diameter of 0.1 um or more and 0.7 um or less, and a filler (B-2) containing a filler (b2-1) with an average particle diameter of 0.9 um to 3.0 $\mu$m, wherein the total blending amount of the filler (B-1) and the filler (B-2) is 230 to 640 parts by volume with respect to 100 parts by volume of the resin (A),
the filler (B-1) and the filler (B-2) as a whole have an average particle diameter of 5 um to 60 um, and
the blending amount of the filler (B-1) is from 0.2 vol% to 5.0 vol% with respect to 100 vol% of the total of the filler (B-1) and the filler (B-2).

As a specific example of the production method I, there is a method including steps of preparing a predetermined amount of the resin (A), the filler (B-1), the filler (b2-1), and if necessary, the filler (b2-2) and the other component (C), charging them into a mixer, and mixing them. In this method, the filler (b2-1) and, if used, the filler (b2-2) correspond to components constituting the filler (B-2), and the filler (B-2) is contained in the resin composition.

According to the production method I, it is possible to adjust the particle size distribution of the filler (B-2) relatively easily.

The blending amount of the filler (B-1) and the preferred range thereof in the production method I are as described above.

The blending amount of the filler (b2-1) in the production method I is preferably 15 vol% to 45 vol%, and more preferably 15 vol% to 40 vol% with respect to 100 vol% of the filler (B).

In the production method I, when the blending amount of the filler (b2-1) is within the above range, improvement of fluidity by the close-packed effect and improvement of thermal conductivity by moderate thermal path formation can be achieved.

The blending amount of the filler (b2-2) in the production method I is preferably the remainder of the filler (B-1) and the filler (b2-1). That is, in the production method I, the filler (B) is preferably composed only of the filler (B-1), the filler (b2-1), and the filler (b2-2).

The blending amount of the filler (b2-1) is preferably 5 times or more, more preferably 20 times or more, and preferably 100 times or less, more preferably 90 times or less in a volume ratio with respect to the blending amount of the filler (B-1).

As a preferred embodiment of the production method I, there is a method of producing a resin composition, including:

a step of mixing a resin (A), a filler (B-1) having a spherical shape with an average particle diameter of 0.1 um or more and 0.7 um or less, a filler (b2-1) with an average particle diameter of 0.9 um to 3.0 $\mu$m, and a filler (b2-2) with an average particle diameter of 5 um to 150 um,
wherein the total blending amount of the filler (B-1), the filler (b2-1), and the filler (b2-2) is 230 to 640 parts by volume with respect to 100 parts by volume of the resin (A),
the filler (B-1), the filler (b2-1), and the filler (b2-2) as a whole have an average particle diameter of 5 um to 60 um, and
the blending amount of the filler (B-1) is from 0.2 vol% to 5.0 vol% with respect to 100 vol% of the total of the filler (B-1), the filler (b2-1), and the filler (b2-2).

(Application of resin composition)

Examples of the application of the resin composition according to one embodiment of the present invention include heat dissipation material applications for efficiently dissipating heat generated from semiconductor components mounted on, for example, home electric appliances, automobiles, and notebook personal computers, specifically, thermal interface materials. Examples of the thermal interface material include heat dissipation greases, heat dissipation gels, and adhesives. Examples of the application of the resin composition according to one embodiment of the present invention include semiconductor encapsulants and underfills.

When a resin that becomes rubbery after curing is used as the resin (A), the flexibility of the resin composition after curing of the resin composition (resin composition cured product) can also be improved as compared with a cured product obtained by curing a conventional resin composition. Therefore, for example, when the resin composition cured product is used as, for example, a heat sheet or a phase change sheet provided between a heat-generating part and a heat dissipation member such as a heat dissipation fin or a heat sink, it is easy to improve adhesion between the heat-generating part and the heat dissipation member, and an advantage that thermal resistance is reduced is obtained.

Examples

Hereinafter, one embodiment of the present invention will be specifically described with reference to examples, but the present invention is not limited to these examples. Abbreviations and designations shown in the examples are as follows.

[Resin (A)]

·R1-A: a mixture of a polyorganosiloxane having a vinyl group with a viscosity of 1000 mPa·s at 25°C and a platinum catalyst in a mass ratio of 1000 : 1. Platinum (0)-1,3-divinyl-1,1,3,3-tetramethyldisiloxane complex solution (manufactured by Alfa Aesar) was used as a platinum catalyst, and the mixing ratio was adjusted such that the amount of Pt was 15 ppm with respect to the resin composition obtained in the following examples or comparative examples.
·R1-B: polyorganosiloxane having a hydrosilyl group with a viscosity at 25°C of 900 mPa·s.
•R2: a mixture of a bisphenol A type epoxy resin and an amine curing agent as a curing agent in a mass ratio of 100 : 5.

[Filler (B)]

Filler (B-1)

·F1 (a): spherical alumina. D10: 0.42 um, D50: 0.52 um, D90: 0.75 um, circularity: 0.96.
·F1 (b): spherical alumina. D10: 0.14 um, D50: 0.19 $\mu$m, D90: 0.31 um, circularity: 0.90.
·F1 (c): spherical alumina. D10: 0.50 um, D50: 0.67 um, D90: 0.97 um, circularity: 0.86.
·F1 (d): alumina. D10: 0.49 $\mu$m, D50: 0.69 $\mu$m, D90: 1.02 um, circularity: 0.75. (F1 (d) is not the filler (B-1) because it is not spherical. However, it is treated as the filler (B-1) for convenience.)

The filler (B-2) was prepared by combining F2 to F9 shown in Table 1 below.

[Table 1]

| Abbreviation | Material | D10 ($\mu$m) | D50 ($\mu$m) | D90 ($\mu$m) | |
|---|---|---|---|---|---|
| F2 | Aluminum nitride | 0.7 | 1.1 | 2.0 | Rounded |
| F3 | Alumina | 1.1 | 1.5 | 2.0 | Rounded |
| F4 | Aluminum nitride | 2.7 | 8.0 | 13.9 | Crushed |
| F5 | Alumina | 11.1 | 31.1 | 54.4 | Spherical |
| F6 | Alumina | 45.6 | 71.8 | 110.5 | Spherical |
| F7 | Aluminum nitride | 76.9 | 108.8 | 165.6 | Spherical |
| F8 | Aluminum nitride | 8.3 | 76.3 | 154.1 | Aggregated particles |
| F9 | Alumina | 2.5 | 3.2 | 4.6 | Rounded |

[Other component (C)]

·S1: alkoxysilane coupling agent
·S2: phosphoric acid ester agent

<Measurement of particle size distribution>

Using, as a sample, one obtained by adding 5 ml of a 5% sodium pyrophosphate aqueous solution to 90 ml of water, adding a filler to the solution, and dispersing the filler with a homogenizer at an output of 200 mA for 3 minutes, the particle size distribution was measured with a laser diffraction type particle size distribution measuring apparatus (MICROTRACK-MT3300EX II manufactured by Nikkiso Co., Ltd.) and using HRA as a calculation mode. The particle size distribution of the entire filler (B-2) was a particle size distribution obtained from addition of particle size distributions obtained from multiplication of the measurement results of the particle size distribution of each of F2 to F9 by the volume ratio of the blending amount of the filler.

The amount of the filler added was 0.05 g when D50 was less than 2 um, 0.1 g when D50 was 2 to 10 um, and 0.3 g when D50 was more than 10 um.

<Measurement of circularity>

Using a field emission scanning electron microscope (manufactured by Hitachi High-Tech Corporation: S-5500), 20 fields of view on the filler (B-1) were observed at magnification of 50,000. The circularity of each filler within the field-of-view area was calculated using an image analysis system (manufactured by Asahi Kasei Corporation: IP-1000PC), and the circularity of the filler (B-1) was calculated by averaging the circularity.

<Example 1>

A silicone composition having a vinyl group was prepared by weighing 100 parts by volume of R1-A as the resin (A), 2 parts by volume of F1 (a) as the filler (B-1), 172 parts by volume of F2, 172 parts by volume of F5, and 173 parts by volume of F6 as the powders constituting the filler (B-2), and 1.0 part by volume of S1 as the other component (C) and kneading them in a mortar.

Further, a silicone composition having a hydrosilyl group was prepared by weighing 100 parts by volume of R1-B, 2 parts by volume of F1 (a) as the filler (B-1), 172 parts by volume of F2, 172 parts by volume of F5, and 173 parts by volume of F6 as the powders constituting the filler (B-2), and 1.0 part by volume of S1 as the other component (C) and kneading them in a mortar.

After weight conversion was performed using the specific gravity of each component so as to obtain a desired volume ratio, the amount of each component was measured.

Next, the silicone composition having a vinyl group and the silicone composition having a hydrosilyl group were mixed in a volume ratio of 1 : 1 to obtain a resin composition. The formulation of the obtained resin composition is shown in Table 2. The case of using R1-A and R1-B is indicated as R1 in Table 2. In addition, the formulation of the filler (B) used in each of the silicone composition having a vinyl group, the silicone composition having a hydrosilyl group, and the resin composition is shown in Table 3, and the physical properties of the filler (B) and the filler (B-2) used in each of these compositions are shown in Table 4.

Thereafter, the obtained resin composition was filled in a mold of 25 mm × 25 mm × t1 mm, and hot pressing was performed at 80°C for 2 tons for 1 hour to obtain a cured resin composition.

<Examples 2 to 7 and 9 to 11 and Comparative Examples 1 to 6 and 8 to 12>

Each composition was obtained in the same manner as in Example 1 except that a silicone composition having a vinyl group and a silicone composition having a hydrosilyl group were prepared so as to obtain the resin compositions shown in Tables 2 and 3. Physical properties of the filler (B) and the filler (B-2) used in each of these compositions are shown in Table 4. The same kinds and amounts of the filler (B) and the other component (C) were blended in each of the silicone composition having a vinyl group and the silicone composition having a hydrosilyl group.

In addition, a cured resin composition was obtained in the same manner as in Example 1 except that the obtained resin composition was used.

<Example 8>

A resin composition was obtained by weighing 100 parts by volume of R2 as the resin (A), 8 parts by volume of F1 (a) as the filler (B-1), 155 parts by volume of F2 and 365 parts by volume of F5 as the powders constituting the filler (B-2), and 1.1 parts by volume of S2 as the other component (C) and kneading in a mortar. The formulation of the obtained resin composition is shown in Table 2, the formulation of the filler (B) used in the resin composition is shown in Table 3, and the physical properties of the filler (B) and the filler (B-2) used in the resin composition are shown in Table 4.

Next, the resin composition was filled in a mold of φ 10 mm × t1 mm, and hot pressing was performed at 120°C for 3 tons for 1 hour to obtain a cured resin composition.

<Comparative Example 7>

A resin composition was obtained in the same procedure as in Example 8 except that the formulation of the resin composition was changed as shown in Tables 2 and 3. Physical properties of the filler (B) and the filler (B-2) used in the resin composition are shown in Table 4.

In addition, a cured resin composition was obtained in the same manner as in Example 8 except that the obtained resin composition was used.

[Table 2]

| | Formulation [parts by volume] | | | | |
|---|---|---|---|---|---|
| | Resin (A) | | Filler (B) | Other component (C) | |
| | R1 | R2 | | S1 | S2 |
| Example 1 | 100 | | 519 | 1.0 | |
| Example 2 | 100 | | 519 | 1.0 | |
| Example 3 | 100 | | 519 | 1.0 | |
| Example 4 | 100 | | 272 | 0.5 | |
| Example 5 | 100 | | 610 | 1.2 | |
| Example 6 | 100 | | 502 | 1.0 | |
| Example 7 | 100 | | 535 | 1.1 | |
| Example 8 | | 100 | 528 | | 1.1 |
| Example 9 | 100 | | 401 | 1.0 | |
| Example 10 | 100 | | 519 | 1.0 | |
| Example 11 | 100 | | 519 | 1.0 | |
| Comparative Example 1 | 100 | | 519 | 1.0 | |
| Comparative Example 2 | 100 | | 519 | 1.0 | |
| Comparative Example 3 | 100 | | 272 | 0.5 | |
| Comparative Example 4 | 100 | | 610 | 1.2 | |
| Comparative Example 5 | 100 | | 502 | 1.0 | |
| Comparative Example 6 | 100 | | 535 | 1.1 | |
| Comparative Example 7 | | 100 | 528 | | 1.0 |
| Comparative Example 8 | 100 | | 162 | 0.3 | |
| Comparative Example 9 | 100 | | 162 | 0.3 | |
| Comparative Example 10 | 100 | | 401 | 1.0 | |
| Comparative Example 11 | 100 | | 519 | 1.0 | |
| Comparative Example 12 | 100 | | 519 | 1.0 | |

[Table 3]

| | Filler formulation [parts by volume] | | | | | | | | | | | |
|---|---|---|---|---|---|---|---|---|---|---|---|---|
| | (B-1) | | | | (B-2) | | | | | | | |
| | F1(a) | F1(b) | F1(c) | F1(d) | F2 | F3 | F4 | F5 | F6 | F7 | F8 | F9 |
| Example 1 | 0.4 | | | | 33.2 | | | 33.2 | 33.2 | | | |
| Example 2 | 1.2 | | | | 32.9 | | | 32.9 | 32.9 | | | |

(continued)

| | Filler formulation [parts by volume] | | | | | | | | | | | |
| | (B-1) | | | | (B-2) | | | | | | | |
| | F1(a) | F1(b) | F1(c) | F1(d) | F2 | F3 | F4 | F5 | F6 | F7 | F8 | F9 |
|---|---|---|---|---|---|---|---|---|---|---|---|---|
| Example 3 | 4.6 | | | | 31.8 | | | 31.8 | 31.8 | | | |
| Example 4 | 0.7 | | | | 29.4 | | 69.9 | | | | | |
| Example 5 | 1.6 | | | | 32.8 | | | 24.6 | | 41.0 | | |
| Example 6 | 1.2 | | | | | 29.5 | | 69.3 | | | | |
| Example 7 | 1.9 | | | | 32.7 | | | 32.7 | | | 32.7 | |
| Example 8 | 1.5 | | | | 29.4 | | | 69.1 | | | | |
| Example 9 | 1.8 | | | | 10.0 | | 29.4 | | 58.8 | | | |
| Example 10 | | 1.2 | | | 32.9 | | | 32.9 | 32.9 | | | |
| Example 11 | | | 1.2 | | 32.9 | | | 32.9 | 32.9 | | | |
| Comparative Example 1 | | | | | 33.3 | | | 33.3 | 33.3 | | | |
| Comparative Example 2 | 5.8 | | | | 31.4 | | | 31.4 | 31.4 | | | |
| Comparative Example 3 | | | | | 29.8 | | 70.2 | | | | | |
| Comparative Example 4 | | | | | 33.3 | | | 25.1 | | 41.6 | | |
| Comparative Example 5 | | | | | | 30.1 | | 69.9 | | | | |
| Comparative Example 6 | | | | | 33.3 | | | 33.3 | | | 33.5 | |
| Comparative Example 7 | | | | | 30.1 | | | 69.9 | | | | |
| Comparative Example 8 | 1.2 | | | | 30.9 | | | 67.9 | | | | |
| Comparative Example 9 | | | | | 31.5 | | | 68.5 | | | | |
| Comparative Example 10 | | | | | 10.0 | | 30.0 | | 60.0 | | | |
| Comparative Example 11 | | | | 1.2 | 32.9 | | | 32.9 | 32.9 | | | |
| Comparative Example 12 | 1.9 | | | | | | | 32.7 | 32.7 | | | 32.7 |

[Table 4]

| | Filler (B) | | | | |
| | | Filler (B-2) | | | |
| | Average particle diameter (μm) | D10 (μm) | Peak in particle size distribution | | H1/H2 |
| | | | 0.9 to 3.0 μm | 5 to 150 μm | |
|---|---|---|---|---|---|
| Example 1 | 30.8 | 0.87 | 1.1 μm | 74.0 μm | 0.67 |
| Example 2 | 29.1 | 0.87 | 1.1 μm | 74.0 μm | 0.69 |
| Example 3 | 26.2 | 0.87 | 1.1 μm | 74.0 μm | 0.68 |
| Example 4 | 5.2 | 0.86 | 1.1 μm | 9.3 μm | 0.53 |
| Example 5 | 37.0 | 0.84 | 1.1 μm | 37.0 μm 105.0 μm | 0.58 |
| Example 6 | 21.9 | 1.32 | 1.5 μm | 37.0 μm | 0.85 |
| Example 7 | 21.6 | 0.86 | 1.1 μm | 40.4 μm | 1.01 |
| Example 8 | 21.2 | 0.91 | 1.1 μm | 37.0 μm | 0.48 |

(continued)

| | Filler (B) | | | | |
|---|---|---|---|---|---|
| | Average particle diameter ($\mu$m) | Filler (B-2) | | | |
| | | D10 ($\mu$m) | Peak in particle size distribution | | H1/H2 |
| | | | 0.9 to 3.0 $\mu$m | 5 to 150 $\mu$m | |
| Example 9 | 56.7 | 1.62 | 1.1 $\mu$m | 74.0 $\mu$m | 0.20 |
| Example 10 | 30.6 | 0.87 | 1.1 $\mu$m | 74.0 $\mu$m | 0.69 |
| Example 11 | 31.1 | 0.87 | 1.1 $\mu$m | 74.0 $\mu$m | 0.69 |
| Comparative Example 1 | 30.5 | 0.89 | 1.1 $\mu$m | 74.0 $\mu$m | 0.68 |
| Comparative Example 2 | 26.2 | 0.86 | 1.1 $\mu$m | 74.0 $\mu$m | 0.69 |
| Comparative Example 3 | 5.3 | 0.87 | 1.1 $\mu$m | 9.3 $\mu$m | 0.53 |
| Comparative Example 4 | 37.2 | 0.89 | 1.1 $\mu$m | 37.0 $\mu$m 105.0 $\mu$m | 0.56 |
| Comparative Example 5 | 21.7 | 1.32 | 1.5 $\mu$m | 37.0 $\mu$m | 0.87 |
| Comparative Example 6 | 22.8 | 0.89 | 1.1 $\mu$m | 40.4 $\mu$m | 1.01 |
| Comparative Example 7 | 21.2 | 0.89 | 1.1 $\mu$m | 37.0 $\mu$m | 0.50 |
| Comparative Example 8 | 20.5 | 0.89 | 1.1 $\mu$m | 37.0 $\mu$m | 0.52 |
| Comparative Example 9 | 20.7 | 0.89 | 1.1 $\mu$m | 37.0 $\mu$m | 0.52 |
| Comparative Example 10 | 57.0 | 3.60 | 1.1 $\mu$m | 74.0 $\mu$m | 0.20 |
| Comparative Example 11 | 31.1 | 0.87 | 1.1 $\mu$m | 74.0 $\mu$m | 0.69 |
| Comparative Example 12 | 31.0 | 2.81 | N/A | 74.0 $\mu$m | 0 |

<Evaluation of flexibility of resin composition (measurement of stress reduction ratio)>

Using a viscoelasticity measuring apparatus (manufactured by TA Instruments: AR 2000ex), 5.0 g of each of the silicone compositions having a vinyl group, the silicone compositions having a hydrosilyl group, and the resin compositions obtained in Examples 1 to 7 and 9 to 11 and Comparative Examples 1 to 6 and 8 to 11 was compressed at 200 um/s, and the stress when compressed to 3 mm was measured. In addition, for the resin compositions obtained in Example 8 and Comparative Example 7, the stress was measured in the same manner.

The measurement of the resin compositions obtained in Examples 1 to 7 and 9 to 11 and Comparative Examples 1 to 6 and 8 to 11 was performed immediately after mixing the silicone composition having a vinyl group and the silicone composition having a hydrosilyl group in a room at 25°C for 2 minutes in a volume ratio of 1 : 1.

Next, from the stress of each composition obtained in Examples 1 to 11 and Comparative Examples 2, 8, and 11 (hereinafter, also referred to as "composition to be measured") and the stress of the composition which is corresponding to a composition not containing the filler (B-1) (hereinafter, also referred to as "reference composition") for each composition to be measured, the stress reduction ratio was calculated according to the following Formula (1). The results are shown in Table 5 or 6.

As the reference composition, for example, the reference composition of the silicone composition having a vinyl group obtained in Example 1 is the silicone composition having a vinyl group obtained in Comparative Example 1, and the reference composition of the resin composition obtained in Example 1 is the resin composition obtained in Comparative Example 1. The reference composition for each composition to be measured is as described in the column of "Reference" in Tables 5 and 6.

$$K = P1/P2 \cdots (1)$$

[K: the stress reduction ratio, P1: the stress of the composition to be measured, and P2: the stress of the reference composition.

When the stress reduction ratio is less than 1, it means that the flexibility of the resin composition is improved by blending the filler (B-1), and it means that the smaller the value, the greater the effect of improving the flexibility by blending the filler (B-1).

<Evaluation of flexibility of cured resin composition (thickness change ratio)>

The amount of change in thickness of the cured product before and after a pressure of 2 Pa was applied to each resin composition cured product obtained in Examples 1 to 11 and Comparative Examples 1 to 11 (thickness (t) before applying pressure - thickness after applying pressure) was measured with a sensor.

Next, from the amount of change in thickness of each resin composition cured product obtained in Examples 1 to 11 and Comparative Examples 2, 8, and 11 (hereinafter, the cured product is also referred to as "cured product to be measured") and the amount of change in thickness of a cured product corresponding to a cured product not containing the filler (B-1) (hereinafter, also referred to as "reference cured product") for each cured product to be measured, the thickness change ratio was calculated according to the following formula (2). The results are shown in Table 5 or 6. The reference cured product for each cured product to be measured is as described in the column of "Reference" in Tables 5 and 6.

$$\Delta T = T1/T2 \cdots (2)$$

[ΔT: thickness change ratio, T1: amount of change in thickness of cured product to be measured, T2: amount of change in thickness of reference cured product]

When the thickness change ratio is more than 1, it means that the flexibility of the resin composition cured product is improved by blending the filler (B-1), and it means that the larger the value, the higher the effect of improving the flexibility.

[Table 5]

| | Reference | Stress reduction ratio | | | Thickness change ratio |
|---|---|---|---|---|---|
| | | Silicone composition having vinyl group | Silicone composition having hydrosilyl group | After mixing two components | |
| Example 1 | Comparative Example 1 | 0.44 | 0.42 | 0.43 | 7.0 |
| Example 2 | Comparative Example 1 | 0.33 | 0.32 | 0.34 | 10.0 |
| Example 3 | Comparative Example 1 | 0.70 | 0.71 | 0.71 | 4.0 |
| Example 4 | Comparative Example 3 | 0.80 | 0.78 | 0.80 | 3.0 |
| Example 5 | Comparative Example 4 | 0.59 | 0.59 | 0.60 | 5.0 |
| Example 6 | Comparative Example 5 | 0.73 | 0.76 | 0.75 | 3.0 |
| Example 7 | Comparative Example 6 | 0.71 | 0.71 | 0.70 | 4.0 |
| Example 9 | Comparative Example 10 | 0.92 | 0.93 | 0.93 | 1.5 |
| Example 10 | Comparative Example 1 | 0.20 | 0.21 | 0.22 | 14.0 |
| Example 11 | Comparative Example 1 | 0.48 | 0.46 | 0.47 | 7.1 |

(continued)

| | Reference | Stress reduction ratio | | | Thickness change ratio |
|---|---|---|---|---|---|
| | | Silicone composition having vinyl group | Silicone composition having hydrosilyl group | After mixing two components | |
| Comparative Example 2 | Comparative Example 1 | 1.10 | 1.08 | 1.10 | 1.0 |
| Comparative Example 8 | Comparative Example 9 | 1.00 | 1.00 | 1.00 | 1.0 |
| Comparative Example 11 | Comparative Example 1 | 1.10 | 1.11 | 1.11 | 1.0 |

[Table 6]

| | Reference | Stress reduction ratio | Thickness change ratio |
|---|---|---|---|
| Example 8 | Comparative Example 7 | 0.65 | 1.0 |

As shown from the evaluation results, in Examples 1 to 11 including 100 parts by volume of a resin (A) and 230 to 640 parts by volume of a filler (B) having an average particle diameter of 5 um to 60 um, wherein the filler (B) contains a filler (B-1) having a spherical shape with an average particle diameter of 0.1 um or more and 0.7 um or less and a filler (B-2) having a peak at least in a range of 0.9 um to 3.0 um in a particle size distribution measured by a laser diffraction method, and the proportion of the filler (B-1) is from 0.2 vol% to 5.0 vol% with respect to 100 vol% of the filler (B), the stress reduction ratio is less than 1, and the flexibility of the resin compositions is improved, that is, the filling properties of the filler is improved as compared with the case where the filler (B-1) is not blended.

In addition, in Examples 1 to 7 and 9 to 11 in which the resin (A) is a curable silicone resin, the thickness change ratio of the resin composition cured product is more than 1, and it was shown that the flexibility is also improved in the resin composition cured product.

In Comparative Example 2 in which the filler (B-1) having a spherical shape with an average particle diameter of 0.1 um or more and 0.7 um or less was blended in an amount of more than 5.0 volume% with respect to 100 volume% of the filler (B) and Comparative Example 8 in which the blending amount of the filler (B) was less than 230 parts by volume with respect to 100 parts by volume of the resin (A), both the stress reduction ratio and the thickness change ratio were about 1, and flexibility in the resin composition and the resin composition cured product was not improved.

In Comparative Example 11 in which a nonspherical filler having an average particle diameter of 0.1 um or more and 0.7 um or less was blended instead of the spherical filler (B-1) having an average particle diameter of 0.1 um or more and 0.7 um or less, both the stress reduction ratio and the thickness change ratio were about 1, and flexibility in the resin composition and the resin composition cured product was not improved.

In Comparative Example 12 in which the filler (B-2) having a peak in the range of 0.9 to 3.0 $\mu$m was not used as the filler (B), the filling properties of the filler were low, and a resin composition could not be prepared.

Claims

1. A resin composition comprising:

   100 parts by volume of a resin (A); and 230 to 640 parts by volume of a filler (B) having an average particle diameter of 5 um to 60 um,
   wherein the filler (B) comprises a filler (B-1) having a spherical shape with an average particle diameter of 0.1 um or more and 0.7 um or less and a filler (B-2) having a peak at least in a range of 0.9 um to 3.0 $\mu$m in a particle size distribution measured by a laser diffraction method, and
   a proportion of the filler (B-1) is from 0.2 vol% to 5.0 vol% with respect to 100 vol% of the filler (B).

2. The resin composition according to claim 1, wherein the filler (B-2) further has a peak in a range of 5 um to 150 um in a particle size distribution measured by a laser diffraction method.

3. The resin composition according to claim 1 or 2, wherein D10 of the filler (B-2) is larger than D90 of the filler (B-1).

4. The resin composition according to any one of claims 1 to 3, wherein the filler (B-1) comprises alumina, and the filler (B-2) comprises aluminum nitride.

5. A method of producing a resin composition, comprising:

a step of mixing a resin (A), a filler (B-1) having a spherical shape with an average particle diameter of 0.1 um or more and 0.7 um or less, and a filler (B-2) comprising a filler (b2-1) with an average particle diameter of 0.9 um to 3.0 $\mu$m,
wherein a total blending amount of the filler (B-1) and the filler (B-2) is 230 to 640 parts by volume with respect to 100 parts by volume of the resin (A),
the filler (B-1) and the filler (B-2) as a whole have an average particle diameter of 5 um to 60 um, and
a blending amount of the filler (B-1) is from 0.2 vol% to 5.0 vol% with respect to 100 vol% of a total of the filler (B-1) and the filler (B-2).

## INTERNATIONAL SEARCH REPORT

| International application No. |
|---|
| **PCT/JP2021/042825** |

**A.     CLASSIFICATION OF SUBJECT MATTER**

*C08L 101/00*(2006.01)i; *C08K 3/013*(2018.01)i; *C08K 3/22*(2006.01)i; *C08K 3/28*(2006.01)i; *C08K 7/18*(2006.01)i
FI:     C08L101/00; C08K3/013; C08K7/18; C08K3/28; C08K3/22

According to International Patent Classification (IPC) or to both national classification and IPC

**B.     FIELDS SEARCHED**

Minimum documentation searched (classification system followed by classification symbols)

C08L101/00; C08K3/013; C08K3/22; C08K3/28; C08K7/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | WO 2016/125664 A1 (AJINOMOTO CO., INC.) 11 August 2016 (2016-08-11) claims, examples 13-14 | 1-4 |
| A | JP 2016-216523 A (DENKA CO LTD) 22 December 2016 (2016-12-22) | 1-5 |
| A | JP 2017-137454 A (KITAGAWA INDUSTRIES CO., LTD.) 10 August 2017 (2017-08-10) | 1-5 |
| A | JP 2018-162366 A (HITACHI CHEMICAL CO LTD) 18 October 2018 (2018-10-18) | 1-5 |
| A | WO 2020/137339 A1 (SUMITOMO BAKELITE CO., LTD.) 02 July 2020 (2020-07-02) | 1-5 |
| A | JP 2020-132827 A (NIPPON AEROSIL CO LTD) 31 August 2020 (2020-08-31) | 1-5 |
| A | WO 2019/230969 A1 (SEKISUI CHEMICAL CO., LTD.) 05 December 2019 (2019-12-05) | 1-5 |

☐ Further documents are listed in the continuation of Box C.     ☑ See patent family annex.

| | |
|---|---|
| \*     Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **04 January 2022** | **18 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 253 482 A1

| INTERNATIONAL SEARCH REPORT Information on patent family members | | | International application No. PCT/JP2021/042825 | | |
|---|---|---|---|---|---|
| Patent document cited in search report | | Publication date (day/month/year) | Patent family member(s) | | Publication date (day/month/year) |
| WO 2016/125664 A1 | | 11 August 2016 | TW 201704333 A | | |
| JP 2016-216523 A | | 22 December 2016 | (Family: none) | | |
| JP 2017-137454 A | | 10 August 2017 | US 2020/0165453 A1 WO 2017/135158 A1 CN 108603034 A | | |
| JP 2018-162366 A | | 18 October 2018 | (Family: none) | | |
| WO 2020/137339 A1 | | 02 July 2020 | (Family: none) | | |
| JP 2020-132827 A | | 31 August 2020 | (Family: none) | | |
| WO 2019/230969 A1 | | 05 December 2019 | US 2021/0147739 A1 EP 3805320 A1 CN 112204106 A TW 202003656 A | | |

Form PCT/ISA/210 (patent family annex) (January 2015)

**REFERENCES CITED IN THE DESCRIPTION**

**Patent documents cited in the description**

- JP 2012111927 A
- JP 2016216523 A